# EUROPEAN PATENT APPLICATION

(11) **EP 3 399 722 A1**
(43) Date of publication of application: **07.11.2018**
(21) Application number: 17199349.6
(22) Date of filing: 31.10.2017
(51) Int. Cl.: H04L 29/08, H04W 88/16, H04L 12/28

(54) **MOBILE ROUTING SYSTEM AND RELATED PLATFORM**

(30) Priority: 02.05.2017 EP 17169057
(71) Applicant: New Tinxs NV, 8200 Brugge (BE)
(72) Inventor: Pollet, Gery, 8200 Brugge (BE); De Mol, Koen, 8750 Wingene (BE)
(74) Representative: LC Patents

(57) **Abstract**

The invention relates to an electronic routing system, arrangements comprising such electronic routing system and methods of operating such systems and related computer environments.

## Description

### FIELD OF THE INVENTION

The invention relates to an electronic routing system, arrangements comprising such electronic routing system and methods of operating such systems and related computer environments.

### BACKGROUND TO THE INVENTION

Communication amongst devices, systems, and computer environments exists. The use of a plurality of communication technologies in a peer-to-peer communication exist also.
However in the context of providing a service with use of devices, of which at least a few are low complex, like sensors, existing intermediary systems and existing arrangements are not satisfactory, especially when a huge amount of such devices are targeted.
Examples of such service are for instance in healthcare, and more in particular the assistance at home wherein e.g. data from sensors (including for instance biometric data) need to be transferred for diagnostic and remedy purposes. Particularly in healthcare, time can be very critical, and hence uplink and downlink of the communication system available for exchanging data becomes crucial. There is a need to provide a system guaranteeing such uplink and downlink at any time and for any place at the required speed according to the application.

Current economy and society is tending towards a service-based model in all kind of aspects. As for consumers, as well as industry a so-called service-oriented model is aimed at. By means of example, buying a car is more and more being replaced by renting a car on demand, whenever the need is there, and this is not only defined by having transportation to drive from one place to another, but also takes into account e.g. the number of seats required. Further, as an example, instead of having a grass-mowing machine, a service may be provided to assure that the grass is always at required length, independently of how the grass is cut. Services in healthcare are increasing rapidly. As a next step for instance, you may receive automatically the right medicine in your mailbox whenever feeling ill, because a monitoring system could be able to diagnose the disease and provide you the correct therapy. The red line in all this is connectivity. Today, this usually goes hand in hand with large installation costs, use of multiple devices and a big diversity in equipment, as well as heavy monitoring challenges to get everything monitored. A lot of things go wrong and hence very often assistance and support is needed. Maintenance requires expensive operators. And moreover, every situation is different, so a standardized system is almost impossible to achieve.

### SUMMARY OF THE INVENTION

The invention provides electronic routing system, arrangements comprising such electronic routing system and methods of operating such systems and related computer environments, adapted for curing the problem discussed above.

In a first aspect of the invention an arrangement is provided comprising: (a) a first platform system (or computer environment), (b) a (distant) routing system, and (c) at least one device (in the vicinity of the routing system), wherein (i) the first platform system and the routing system are adapted to be able to perform wired communication (e.g. Ethernet) with each other and further at least one first wireless communication with each other (e.g. Wi-Fi and/or LTE); and (ii) the routing system and the device are both adapted to be able to communicate with each other. The arrangement is further characterized in that via the routing system together with the first platform and the at least one device a service is deployed. The routing system may be located at a particular distance from the first platform system. Examples in the field of such at least one device are for instance a heartbeat monitor, a temperature sensor or light sensor, a printer, a weaving apparatus, or a vending machine whereas a possible service can be healthcare support, environmental monitor, production monitoring and/or maintenance, data streaming. In other words, any kind of device or sensor installed for monitoring purposes or either interesting to be installed for monitoring or intelligence reasons can be named, as well as any kind of service or activity to be applied, or related or connected therewith.
In an embodiment of the invention, the arrangement is configured such that via the routing system the first platform system and the at least one device are in direct (remote) control.
In an embodiment of the invention, the arrangement further comprises: (d) a second (client) platform system, wherein the first platform system and the second (client) platform system are both adapted to be able to communicate (220) with each other, and wherein the service is provided between the second (client) platform system and the at least one device, via the first platform system and the routing system.
In an exemplary embodiment thereof the device can be a mobile computer of a user while the second platform being the related data center. The invention enables a secure transparent communication between these two edge devices.

In an embodiment of the invention, the routing system has a physical interface supporting wired communication (for the uplink) and comprises e.g. an Ethernet connector.
In an embodiment of the invention, the routing system has a physical interface supporting wireless communication (for the uplink) and comprises e.g. a suitable antenna.
In an embodiment of the invention the first platform system and the routing system are further adapted to be able to perform at least one further, i.e. a second wireless communication, being different in communication technology from the first wireless communication, with each other. In an embodiment of the invention, the routing system has a further physical interface in addition, supporting wireless communication (for the uplink) and comprises e.g. a suitable antenna.

In a second aspect of the invention a routing system is provided, suitable for use in the arrangements described above comprising: (a) first means for first communication (to the first platform system) and (b) second means for second communication (to the at least one device), wherein (i) the first means being capable to perform a first bidirectional communication (via a plurality of physical interfaces, of which at least one provides for wired communication), (ii) the first means being capable to perform the first bidirectional communication via a plurality of different communication technologies (e.g. Ethernet and/or Wi-Fi and/or LTE), (iii) the second means being capable to perform a second bidirectional communication with a plurality of devices (via another plurality of physical interfaces); and (iv) the second means being capable to perform the second bidirectional communication via a plurality of different communication technologies (e.g. Ethernet and/or Wi-Fi and/or Bluetooth). The routing system may be located at a particular distance from the first platform system. Amongst the plurality of physical interfaces can be mentioned e.g. a Wi-Fi interface, a USB entry, Bluetooth interfaces or for example Ethernet ports.
In an embodiment of the invention the routing system is adapted in that the first means enables wired communication (for the uplink) (e.g. Ethernet).
In an embodiment of the invention one of the plurality of physical interfaces supports wired communication (for the downlink) and comprises e.g. an Ethernet connector.
In an embodiment of the invention one of the plurality of physical interfaces supports a wireless communication (for the downlink) and comprises e.g. a suitable antenna.
In an embodiment of the invention one of the plurality of physical interfaces supports another wireless communication (for the downlink) and comprises e.g. a suitable antenna.
In an embodiment of the invention the routing system further comprises control means being adapted for supporting services deployed across said routing system, either directly between the first platform system or indirectly via the first platform system between the second (client) platform system and the at least one device.

In an embodiment of the invention the routing system comprises control means being adapted to ensure continued (e.g. with smooth handover) communication between the routing system and the first platform system via use of the plurality of different communication technologies (e.g. switching between wired and wireless communication and/or between different wireless communication technologies if present).
In an embodiment of the invention the second means are adapted to perform short-range wireless communication (e.g. Bluetooth).
In an embodiment of the invention the routing system comprises control means being adapted to ensure continued (e.g. with smooth handover) communication between the routing system and the at least one device via use of said plurality of different communication technologies (e.g. switching between wired and wireless communication and/or between different wireless communication technologies if present).

While the above communication methods supported by the second means are network protocol based, according to a further embodiment of the invention, the second means are adapted to support non-network protocol based communication (e.g. USB) and the routing system is adapted to load and support (e.g. execute) the related driver thereto for any device, connectable in this fashion.
Note that while in such embodiment the non-network protocol based communication devices are in essence so-called IP unable, the routing system is adapted for providing for the outer world an IP address for identifying these devices. In an exemplary embodiment such device could be an USB-NFC reader, to be used in a contactless payment use scenario. While in various embodiments of the invention these devices are sensor devices, this is not a necessity either. In an exemplary embodiment the device is a (Bluetooth) speaker (and hence so-called IP unable) whereas the invention still enables streaming of audio over an IP network.

According to an embodiment of the invention, within the routing system one or more of the following functions or sensor systems are integrated: GPS and/or 3D gyroscope and/or temperature sensor and/or humidity sensor and/or atmospheric pressure sensor and/or audio sensor and/or VOC sensor and/or proximity sensor and/or ambient light sensor. In a preferred embodiment, the routing system comprises at least GPS and any of the other sensors mentioned; and in a further preferred embodiment all of the mentioned sensors are provided.

For sake of completeness while the routing system above is casted in the context of having external (sensor) devices being served by it, in principle, for the embodiment explained above wherein the routing system has its own functions, the routing system could operate standalone also. Such variant does not necessary require the second means for communication and focusses on communicating on information obtained from its own functions.

In a third aspect of the invention an identification managing method is provided for direct (remote) control of at least one device from a first platform system via a routing system (to thereby deploy a service). The direct control of the at least one device can be performed in a remote way. The routing system, being in the vicinity of the at least one device, is at a certain distance from the first platform system, In the vicinity here is for instance centimeters to the range of meters or even a few hundred meters, whereas the certain distance as referred to can be abroad, even at the other side of the world. With direct control is meant that the first platform system is capable of identifying the device (via the device its IP address directly). The identification managing method comprises the steps of: (a) performing at least in part wireless communication between the first platform system and the routing system, (b) performing communication between the routing system and the device, and (c) managing the identification process of the device at the first platform system.

In a fourth aspect the invention a performance communication method is provided for direct (remote) control of at least one device from a first platform system via a routing system (to thereby deploy a service). The direct control of the at least one device can be performed in a remote way. The routing system is in the vicinity of the at least one device, whereas the routing system is at a distance from the first platform system. Direct control means that the first platform is capable of identifying the device (via the device its IP address directly). The performance communication method comprises the steps of: (a) performing at least in part wireless communication between the first platform system and the routing system, and (b) performing communication between the routing system and the device, wherein one or more of the communications are managed in that, based on receipt of the quality of one or more of the available communication channels, one of a plurality of different communication technologies available thereon is selected.

Preferably the identification and performance communication method are combined.

According to an embodiment of the invention, the routing system further comprises a computation means, being capable of performing computations and/or calculations on communicated data via this means. The computations and/or calculations can be used for (i) analysis of the communicated data; and/or (ii) compression and optionally decompression of the communicated data and/or (iii) encryption and optionally decryption of the communicated data. The computation means and/or the control means are for example together one single or each a dedicated processor. With communicated data is meant all data transferred or transmitted within the platforms of the arrangement and amongst all sensors and/or devices possibly present within these platforms. The routing system may further comprise storage means adapted for (sufficient) storage of IP addresses of the whole set of devices present, these devices being targeted for communicating with the routing system via the second means. The storage means is connected to either one or both the computation means and control means.

In an embodiment, the routing system is adapted for using a variety e.g. a plurality of different network security techniques. More in particular, the routing system may be adapted for using such variety of network security techniques in a random fashion.

In a further embodiment, the routing system may have the required physical interfaces and related software for the devices being targeted for communicating with the routing system.

In summary, with the invention, a routing system designed with a selection of hardware and software features is provided, suited to fit in a long sought for a kind of all-in routing arrangement, meaning e.g. including also service arrangement. Regarding this latter can be particularly referred to its role as intermediate amongst possibly a huge amount of devices (e.g. sensors) and platforms, not necessarily being extremely intelligent. The arrangement represents (in part) wireless communication capabilities, interfaces for the devices required or wished for, and furthermore capabilities (e.g. in terms of computations) missing in the devices and required to avoid communication overload. The selection of hardware, such as for instance interfaces, computation and storage means, is defined by the context of the routing or service arrangement and complemented with software, exploiting the hardware features (i) in terms of identification (IP addresses) requirements as seen from the platform and (ii) in terms of communication guarantees and safety.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings makes apparent to those skilled in the art how the several forms of the invention may be embodied in practice.
**Figure 1****: shows a schematic representation of the arrangement as claimed.**
**Figure 2****: shows a schematic representation of the routing system as claimed.**
**Figure 3****: shows an embodiment of the invented arrangements.**
**Figure 4****: shows an embodiment of the invented routing system.**
**Figure 5****: shows another embodiment in accordance with the invention of the arrangements as in** **Figure 3****.**
**Figure 6****: shows another embodiment in accordance with the invention of the routing system as in** **Figure 4****.**
**Figure 7****: (A-B-C) shows a healthcare use case in accordance with the invention.**
**Figure 8****: illustrates an embodiment of the routing system as edge computing system in accordance with the invention.**
**Figure 9****: illustrates an embodiment of the routing system, the central platform and connections in between in accordance with the invention.**

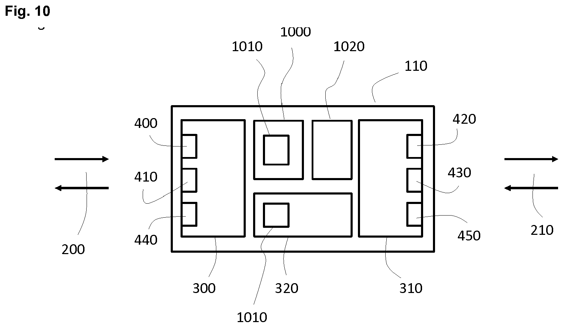

**Figure 10****: shows a further schematic representation of the routing system as claimed, with more detail and functionality as compared to** **Figure 2****.**

### DETAILED DESCRIPTION OF THE INVENTION

The invention provides a mobile router system, with combined long and short distance wireless communication, in a preferred embodiment 4G and Wi-Fi, targeted for (so-called managed Wi-Fi) company services. The mobile router system is provided with sensors or is provided with means for integration of sensors in the system. The invention provides an accompanying platform, i.e. a computer, computer system or computer environment with suitable software, for central management of the mobile router system from the platform located at a particular distance from the system.

The platform provides various routing (e.g. use of appropriate communication means) services, in particular least-cost routing and/or best-cost routing and/or quality of service routing, wherein these services take into account the various uplink communication possibilities between the system and the platform. The platform is in particular designed for use with a huge amount of such services (more than 10.000, even up to 100.000) and an extreme high uptime (more than 99%, up to 99,9%).

With the invention all communication means are provided, including intelligent software, such that the routing system itself automatically configures to be connected with the platform. Whenever something goes wrong in the routing environment, the routing system will detect this and recover subsequently in an automated way. The routing system is monitored from a central platform, acting as central turntable for communication. The central platform assures flawless communication of data between the routing system, the sensors and/or devices connected to the routing system, and the client or user's infrastructure. In other words, all kind of connection or connectivity worries for the user, are now eliminated.

According to an embodiment of the invention, most recent standards regarding network and communication security are applicable and used within the routing environment. Moreover, random use thereof is performed such that hacking of the environment, or either stealing data or manipulating systems or data within the environment, by humans or intelligent robots becomes extremely difficult.

According to a further embodiment, the present invention provides on one hand all hardware components to be combined for an all-in-one solution, and on the other hand intelligent software for monitoring and controlling these components such that a safe and secured connectivity is guaranteed in a fully automated way.

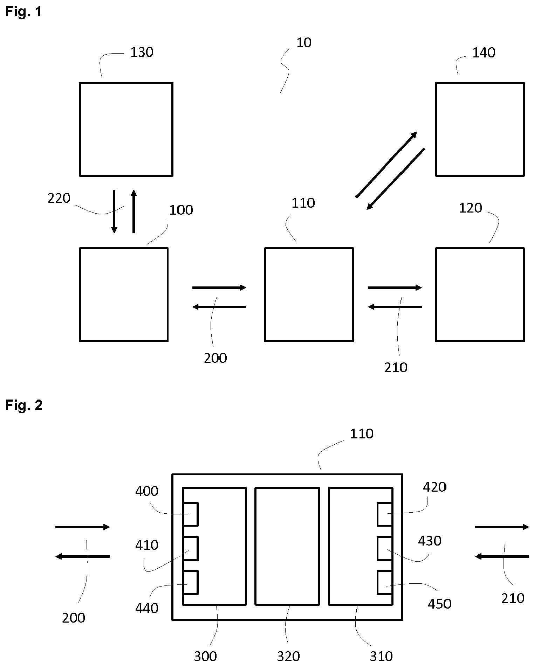

Figure 1 shows a schematic representation of a routing environment or arrangement 10, with a routing system 110, located at a certain distance from platform systems 100, 130, and comprising one or more devices 120 in the neighborhood of the routing system 110. The arrangement 10 further illustrates the wireless bidirectional communication 200 provided between the routing system 110 and a first platform system 100, whereas another bidirectional communication 210 between the routing system 110 and the one or more devices 120 is depicted. Amongst the platform systems 100, 130, a second (client) platform system 130 is also shown, and both first and second platform systems 100, 130 are connected and communicate with each other via bidirectional communication 220. The arrangement 10 is enabled to deploy services by and between the platform systems 100, 130 on one hand and the devices 120 on the other hand, via the routing system 110. The first platform system 100 is used as go-between to provide services between the second platform system 130 and the one or more devices 120. One or more of another type of devices 140 is further depicted in Figure 1.

Figure 2 shows a schematic representation of a routing system 110, including bidirectional communications 200, 210 with respectively a first platform system 100 and with one or more devices 120. The routing system 110 comprises first means 300 for a first bidirectional communication 200 to the first platform system 100 via a plurality of physical interfaces 400, 410, 440, and second means 310 for a second bidirectional communication 210 to the one or more devices 120 via another plurality of physical interfaces 420, 430, 450. The first bidirectional communication 200 with the first platform system 100 is performed via a plurality of different communication technologies, whereas the second bidirectional communication 210 with the one or more devices 120 is also performed via a plurality of different communication technologies, which may differ from the ones used for the first bidirectional communication 200. The routing system 110 further comprises control means 320 being adapted for supporting services deployed across the routing system 110. These services appear either directly between the first platform system 100 and one or more devices 120, or indirectly via the first platform system 100 between the second (client) platform system 130 and one or more devices 120. According to an embodiment, the control means 320 are adapted such that via the routing system 110 the first platform system 100 and the one or more devices 120 are in direct (remote) control. According to a further embodiment, the control means 320 are adapted to ensure continued communication between the routing system 110 and the one or more devices 120 on one hand and/or between said routing system 110 and the first platform system 100 on the other hand, while using a plurality of different communication technologies.

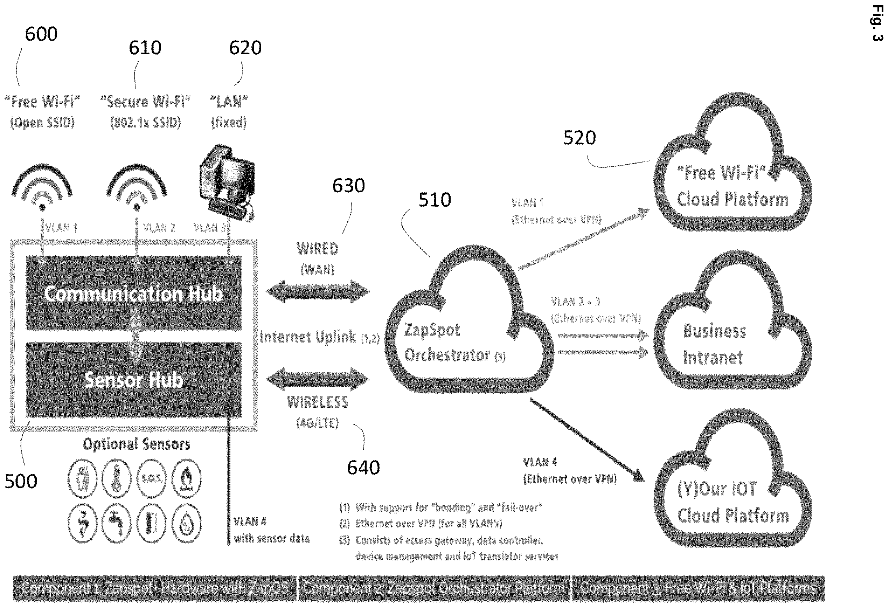

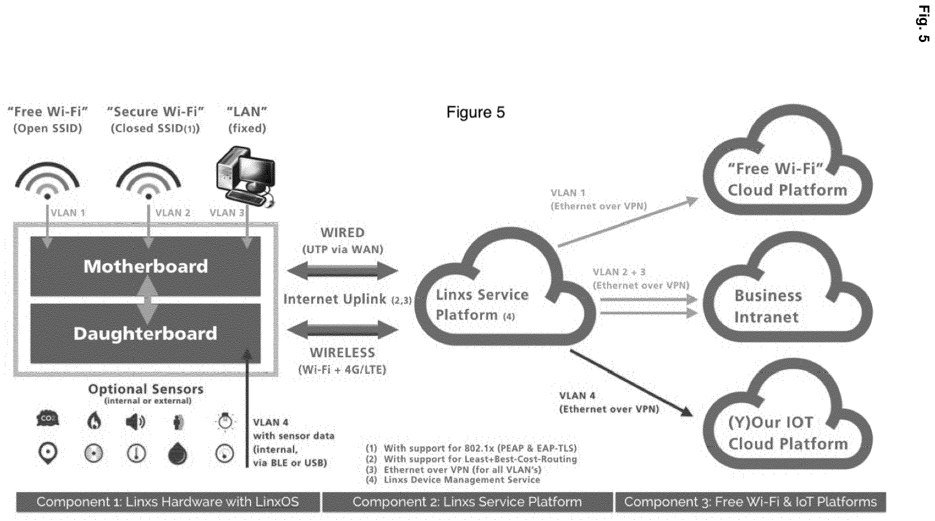

Figure 3 shows an embodiment of the mobile router system 500, its communication possibilities 600, 610, 620 to other (local) devices (which are possibly but not limited thereto sensor devices), the first platform system 510, the communication possibilities 630, 640 therein between, another second platform system 520, comprising a plurality of platforms, and communicating to the first platform system in various ways depending on the type of platform. Note that the system 500 may have its own sensors and/or been provided with means to integrate one or more sensors. The presence of multiple communication possibilities both at the downlink side for communications 600, 610, 620 and the uplink side for communications 630, 640 and especially the different nature thereof, in particular wireless and wired, is herewith emphasized. Figure 5 shows another embodiment of the mobile router system 500 as in Figure 3.

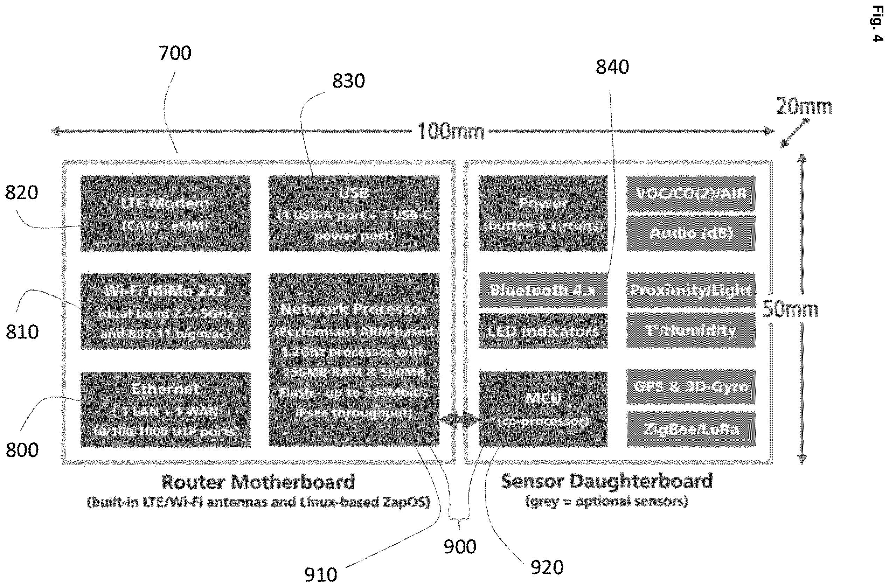

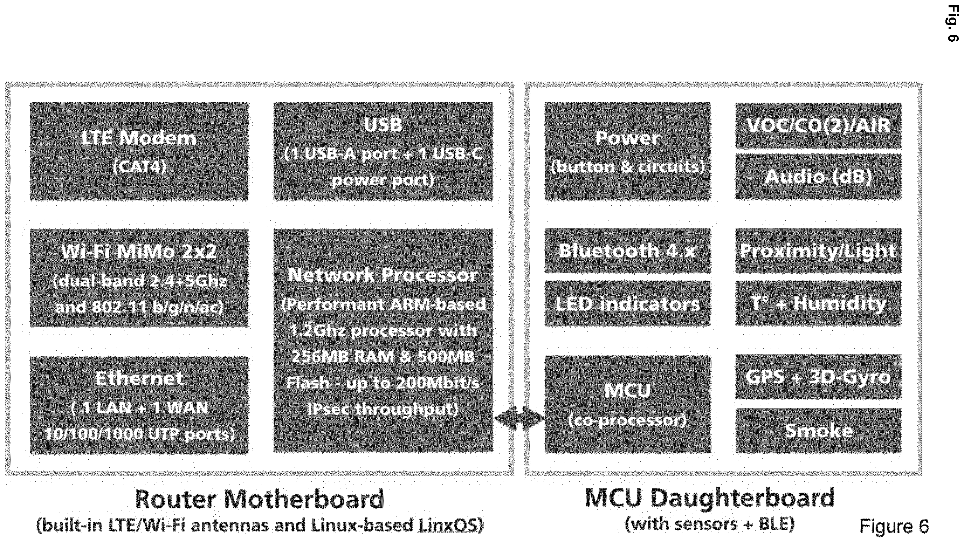

Figure 4 shows an embodiment of the mobile router system 700, its communication possibilities or components 800, 810, 820, 830 and optionally a Bluetooth component 840 either targeting to other (local) devices, in the vicinity of the mobile router system 700, or connecting with a distant platform system. Note that the mobile router system 700 may have its own sensors and/or been provided with means (in particular the sensor board) to integrate one or more sensors. The presence of multiple communication possibilities and especially the different nature thereof, in particular wireless and wired, is herewith emphasized. Some of those communication possibilities are targeting the distant communication, like long distance wireless communication 820, others by their nature target the local communications 810, 830 (and optionally communication 840), and the remaining possibilities 800 support both uplink and downlink. The mobile router system further has control means 900, here partitioned over two computation means 910, 920, i.e. a network processor 910 and a co-processor 920. Other auxiliary components like power supply, indicators are also available. Other partitioning of the different components such as for instance communication components, sensor components, computation means or components, and auxiliary components, over one, two or more boards is also possible in accordance with the invention. Figure 6 shows another embodiment of the mobile router system 700 as in Figure 4.

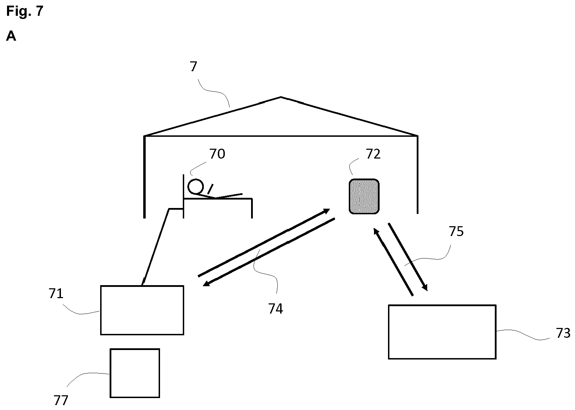

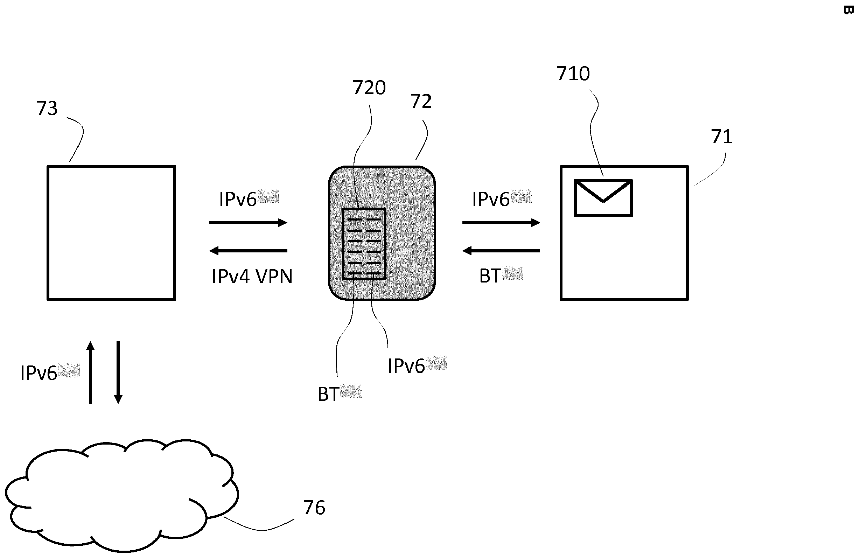

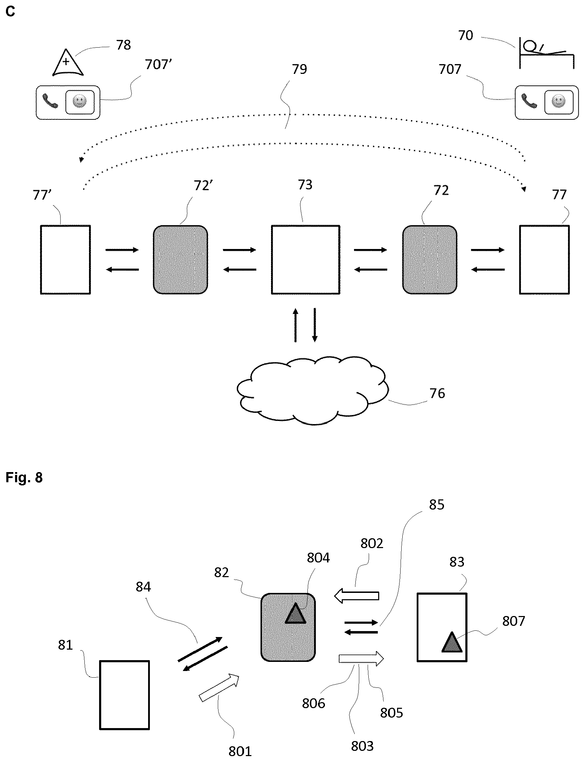

A further embodiment, more in particular a use case of the present invention, is now described while referring to Figure 7. With respect to healthcare, or homecare in particular, more and more monitoring of a patient 70 at home 7 is at stake. Several devices, such as for example Bluetooth healthcare sensors 71 can be applied. In general, and according to the art, Bluetooth devices cannot be monitored over a long distance while monitoring of Bluetooth devices gets disturbed due to the information they are pushing to a central platform every few minutes or even seconds. As shown in Figure 7a, a solution is provided with a routing system 72 in accordance with the invention, being in fact a combination of a mobile router and a sensor hub, such that not only a Bluetooth hub is offered in the patient's network, moreover the internet connection with the patient's home environment is guaranteed. The routing system 72 comprises built-in Bluetooth functionality, and hence the Bluetooth healthcare sensors 71 of the patient 70 at home 7 can herewith connect. No longer Bluetooth devices, but the routing system 72 itself is now exchanging information with the central platform 73 via a bidirectional communication 75, whereas another bidirectional communication 74 is present for communication between the Bluetooth sensors 71 and the routing system 72. As schematically depicted in Figure 7b, a Bluetooth sensor 71 has a Bluetooth address 710. The routing system 72 receives all Bluetooth addresses 710 from all sensors 71 and saves these in a list or table 720. The routing system 72 also provides in a safe and secured IPv4 VPN connection over the public Internet to the central platform 73, and further towards a cloud platform 76. For all the Bluetooth addresses 710 listed in the table 720, the routing system 72 would like to add corresponding IPv6 addresses, and therefore asks the cloud platform 76 for (virtual) IPv6 addresses. The Bluetooth sensors 71 can now be monitored from a central location. For the central platform 76 it appears to be now that every sensor 71 has an IPv6 address. Moreover, the IPv6 addresses can be stored at the same private IP range of the cloud platform 76, facilitating management. Whereas every sensor 71 or device 77 is accessible from its IPv6 address, information can easily be submitted to this address. The patient 70 at home, having a Bluetooth speakerphone next to the patient's bed, can call and have a conversation with a caregiver 78, being also in the possession of such Bluetooth speakerphone. As illustrated in Figure 7c, all data including the entire conversation, is directly occurring from speakerphone 707 to speakerphone 707' via two routing systems 72, 72' over the public Internet and the central platform 73. A continuous connection is now present between the Bluetooth device 77, 77' and the central platform 73. In other words, it seems that every sensor 71 or device 77, 77' is now directly connected with the central platform 73 by means of an Ethernet cable. Moreover, it appears to be that sensors 71, 71' or speakerphones 707, 707' respectively are in direct connection with one another via a bidirectional communication 79, represented by the dotted curved lines with arrows indicating both directions of communication. Instead of Bluetooth sensor or devices, other type of sensors or devices operating rather short-range such as for instance with ZigBee or Z-wave, are also understood under the invention, provided that corresponding hardware and software is embedded in the routing system.

With the routing system according to the present invention, automatic switching amongst different uplinks such as e.g. LTE, Wi-Fi, and Ethernet is possible. Hence, the routing system is not depending on (the quality of) the patient's network, by means of example while referring again to use case above. Furthermore, the routing system can cluster bandwidths of these uplinks in order to achieve more capacity. In addition, in accordance with the invention, not only can the quality of the bandwidth be monitored between the routing system and the central platform, but also between the sensors and/or devices, the routing system and the central platform. Again referring to the use case above, in case the quality of the speakerphone is not appropriate, it can be checked whether this is caused by a limited bandwidth between the routing system and the central platform, or between the routing system and the device, due to for example interference, or because the device is too far away from the routing system.

According to an embodiment of the invention, the routing system also provides in edge functionalities, also known referred to as the fog being the follower of the cloud. Recently, issues pop up regarding the need of a massive amount of bandwidth and the existence of an overload of big data that is flowing to the datacentres. Using the routing system also as edge computing system executing analysis and functionality can be brought to the client or end-user as close as possible. A distributed mechanism of computing power is generated, and hence problems of limited bandwidth and the presence of big data can be captured. While referring to Figure 8, this distributed mechanism is illustrated and further described. In this figure, a hollow arrow in a particular direction represents data transfer. The routing system 82 exchanges information with the central platform 83 via a bidirectional communication 85, whereas another bidirectional communication 84 is present for communication between the sensors or devices 81 and the routing system 82. Data 801 entering the routing system 82, either from built-in sensors (not shown), or from connected sensors or devices 81, can be analysed by the routing system 82 itself. Only requested results 803 are transferred to the central platform 83, and hence bandwidth as well as storage capacity in the central datacentres is saved. Data 805 to be communicated to the central platform 83 can be compressed and encrypted in an ideal manner, such that again bandwidth is saved. Data transfer 802 from the central platform 83 towards the routing system 82, and thus also entering the routing system 82, is also depicted. The routing system 82 can be programmed to perform actions 804 based on entered data 801, 802. The routing system 82 can thus execute local automation, and therefore it is no longer necessary to communicate first to a central platform 83 before performing the action 804. The possibility remains however, to alarm and for example to communicate the cause, performed action 804, or result 806 to the central platform 83. The routing system 82 can further be programmed to perform actions 807 being submitted from the central platform 83. Herewith, the end-user not only has the connection with equipment or devices in the field, but can also control such devices. In summary, a powerful processor is combined with a router into the routing system in accordance with the present invention. In an embodiment, firmware is provided enabling the router, guaranteeing yet a safe and secured connection, to operate on intelligent software accordingly. Moreover, all this is preferably implemented in the same central management system that also monitors the routers.

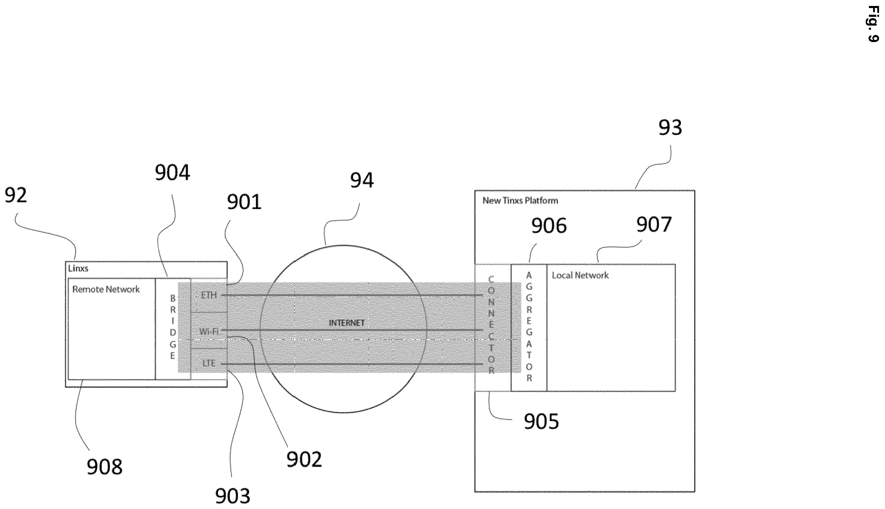

More detail regarding the communication technologies and available connections, including security aspects regarding the routing arrangement, in accordance with the invention, are now described together with the illustrative embodiment of Figure 9. The routing system 92 provides in a safe and secured connection over the public Internet 94 to the central platform 93. The routing system 92 can connect to the remote central platform 93 via three individual technologies: Ethernet 901, Wi-Fi 902 and LTE 903 (mobile). With the Ethernet 901 connection, a cable connection to any Internet enabled wired network is provided. Two Ethernet ports are available, wherein by default, one is used for Internet connection and the other one is used for local network connectivity. If no local network is required by Ethernet, the second Ethernet port might also be used for a second Internet link. Via the Wi-Fi 902 connection, the routing system 92 will automatically search for and connect to open Wi-Fi networks that are Internet enabled. The ports can also be manually connected to closed or private Wi-Fi networks. Two Wi-Fi radios are available wherein by default, one is used for Internet connection and the other one is used for local network connectivity. If no local network is required by Wi-Fi, the second Wi-Fi radio might also be used for a second Internet link. The routing system 92 also comprises a built-in LTE 903 modem with nano sim card to connect to any mobile network. A sim card with private APN (no public Internet for extra security) can be made available for use. On each of the available uplink connections 901, 902, 903, the routing system 92 will keep trying to create a connection towards the central platform 93 via a connector 905 until succeeded by using several IP techniques.

The routing system 92 comprises a bridge 904 that will use any of the available connections 901, 902, 903 to the central platform 93 to create a tunnel towards the aggregator 906. The bridge 904 has two main functions. First is providing a continuous connection. The bridge 904 will make sure that there is an individual connection to the aggregator 906 over each of the available Internet connections. The best possible technology (Routing/GRE/L2TP/IPSec/...) will always be used. Secondly, the bridge 904 supports in load balancing. Depending on the setting, the bridge 904 will use all the available connections 901, 902, 903 to send and receive data to and from the central platform 93. Either one of the available connections (Least Cost/Highest Speed/Round Robin/Highest Priority) is used to get the best possible connectivity, or else all connections (Bandwidth aggregation/MPTCP/OSPF/BigIP) are combined to get maximum bandwidth.

Combining both connectivity and bridging functions present in the routing system 92, it will have optimal connection to the central platform 93 at all times. On top of that, a transparent tunnel is set up from inside the routing system 92 to the inside of the central platform 93. All traffic from and to the Internet will be blocked, whereas only traffic between the routing system 92 and the central platform 93 is allowed. This traffic is encrypted in order to prevent any outside attacks. This way, a secured communication is set up between the Local Network 907 on the central platform 93 and the Remote Network 908 on the routing system 92. With the routing system 92, a stable, robust and secure remote connectivity is provided.

## Claims

1. An arrangement (10) comprising: (a) a first platform system (100), (b) a routing system (110), and (c) at least one device (120), wherein (i) said first platform system (100) and said routing system (110) being adapted to be able to at least in part wirelessly communicate (200) with each other; and (ii) said routing system (110) and said at least one device (120) being adapted to be able to communicate (210) with each other, said arrangement (10) further being **characterized in that** via said routing system (110) with said first platform system (100) and said at least one device (120) a service is deployed.

2. The arrangement of claim 1, wherein via said routing system (110) said first platform system (100) and said at least one device (120) are in direct control.

3. The arrangement of claim 1 or 2, further comprising: (d) a second platform system (130), wherein said first platform system (100) and said second platform system (130) being adapted to be able to communicate (220) with each other; and wherein said service is provided between said second platform system (130) and said at least one device (120), via said first platform system (100) and said routing system (110).

4. The arrangement of claim 1 to 3, wherein said at least one device having a sensor capability.

5. The arrangement of claim 1 to 4, wherein a plurality of said at least one devices (120) is supported by said routing system (110).

6. A routing system (110), suitable for use in the arrangement (10) of claim 1 to 5 comprising: (a) first means (300) for first communication and (b) second means (310) for second communication, wherein (i) said first means being capable to perform a first bidirectional communication, (ii) said first means being capable to perform said first bidirectional communication via a plurality of different communication technologies, (iii) said second means being capable to perform a second bidirectional communication with a plurality of said at least one devices (120); and (iv) said second means being capable to perform said second bidirectional communication via a plurality of different communication technologies.

7. The routing system (110) of claim 6, further comprising control means (320) being adapted for supporting services deployed across said routing system (110).

8. The routing system (110) of claim 7, wherein said control means (320) being adapted to provided that via said routing system (110) said first platform system (100) and said at least one device (120) are in direct control.

9. The routing system (110) of claim 6 to 8, comprising control means (320) being adapted to ensure continued communication between (i) said routing system (110) and said at least one device (120) and/or (ii) said routing system (110) and said first platform system (100), via use of said plurality of different communication technologies.

10. The routing system (110) of claim 6, further comprising a computation means (1000), capable of performing computations on communicated data via said means, said computations being used for (i) analysis of said communicated data; and/or (ii) compression of said communicated data and/or (iii) encryption of said communicated data.

11. The routing system (110) of claim 10, wherein said computation means (1000) and/or said control means (320) being a processor (1010).

12. The routing system (110) of claim 10 or 11, further comprising storage means (1020) adapted for storage of IP addresses of said at least one devices (120) communicating with said routing system (110) via said second means, said storage means (1020) being connected to either one or both said computation means (1000) and said control means (320).

13. The routing system (110) of any of the previous claims, being adapted for using a variety of network security techniques,

14. The routing system (110) of claim 13, being adapted for using said variety of network security techniques in a random fashion.

15. The routing system (110) of any of the previous claims, having the required physical interfaces and related software for said at least one devices (120) communicating with said routing system (110).
